# EUROPÄISCHE PATENTSCHRIFT

(11) **EP 0 395 847 B1**
(45) Veröffentlichungstag und Bekanntmachung des Hinweises auf die Patenterteilung: **05.05.1993**
(21) Anmeldenummer: 90103292.0
(22) Anmeldetag: 21.02.1990
(51) Int. Cl.: E05F 15/10

(54) **Antriebseinrichtung für ein motorisch angetriebenes Klappverdeck**
Actuator assembly for a motorised folding top
Assemblage d'entraînement pour un toit pliant entraîné par moteur

(30) Priorität: 03.05.1989 DE 8905574 U
(43) Veröffentlichungstag der Anmeldung: 07.11.1990
(73) Patentinhaber: ED. Scharwächter GmbH & Co.KG., D-42855 Remscheid (DE)
(72) Erfinder: Nothaft, Josef, 8351 Schaufling (DE); Völk, Raimund, 8360 Deggendorf (DE)
(74) Vertreter: Schön, Theodor, Patent- und Zivilingenieur

(56) Entgegenhaltungen:
- EP-A- 0 283 577
- DE-A- 3 826 411
- DE-B- 2 327 486

## Beschreibung

Die Erfindung bezieht sich auf eine Antriebseinrichtung für ein motorisch antreibbares Klappverdeck für Kraftfahrzeuge, welches ein im wesentlichen aus einem vorderen und einem hinteren Dachrahmen, einem vermittels einer Konsole an der Fahrzeugkarosserie angelenkten Hauptspriegel, einer diesen abstützenden Sturmstange sowie einem Spannbügel bestehendes Gestänge und einen motorischen Antrieb samt einer Übertragungseinrichtung zur aufeinanderfolgenden Beaufschlagung des Hauptspriegels und des Spannbügels mit der Antriebskraft des motorischen Antriebes umfasst.

Bei motorisch antreibbaren Klappverdecken der vorgenannten Bauart für Kraftfahrzeuge ist es bekannt den Hauptspriegel mittels eines Antriebsmotors unmittelbar anzutreiben und den Antrieb für den Spannbügel mittels eines Gestänges oder einer Kurvensteuerung derart vom Antrieb für den Hauptspriegel abzuleiten, daß der Spannbügel zur Karosserie hin abgesenkt wird, wenn der Haupspriegel und mit diesem der Verdeckrahmen seine annähernde Schließlage erreicht haben, während der Spannbügel angehoben wird, bevor der Hauptspriegel in Richtung auf die Öffnungslage des Klappverdekes bewegt und damit auch der Verdeckrahmen beigeklappt wird. Resultierend aus der für diesen Ablauf erforderlichen Bewegungsfolge von Hauptspriegel und Spannbügel ist bei den bekannten Antrieben eine aufwendige und störungsanfällige Gestänge- bzw. Kurvenführungsanordnung erforderlich, die zudem noch im Bereich der Anlenkung des Hauptspriegels an der Fahrzeugkarosserie untergebracht werden muß. Antriebsanordnungen, bei den der Hauptspriegel und der Spannbügel durch voneinander unabhängie Antriebsmittel angetrieben werden (wie z.B. in der DE-A-3826411), können zwar hinsichtlich ihrer Unterbringung in der Fahrzeugkarosserie günstiger gestaltet werden, erfordern jedoch voneinander getrennte Antriebsmotoren und infolge der erforderlichen Bewegungsfolge von Hauptspriegel und Spannbügel eine aufwendige Steuerung für die Antriebsmotoren.

Der Erfindung liegt daher die Aufgabe zugrunde für ein motorisch angetriebenes Klappverdeck für Kraftfahrzeuge eine Antriebseinrichtung zu schaffen, die mit einem einzigen und einfachen Antriebsmotor auskommt und an geeigneter Stelle innerhalb der Fahrzeugkarosserie unterbringbar ist und die ferner mit einem geringstmöglichen Herstellungs- und Montageaufwand realisierbar ist.

Diese Aufgabe wird erfindungsgemäß im wesentlichen dadurch gelöst, daß der Spannbügel und der Hauptspriegel jeweils über eine Schubstange und einen um eine feststehende Achse drehbar gelagerten Hebel mit einer von einem Antriebsmotor angetriebenen Welle in getrieblicher Antriebsverbindung stehen, wobei die beiden Hebel um zueinander nicht konzentrische Achsen schwenkbar gelagert sowie wegabhängig antriebsgekoppelt sind. Die Verwendung je einer Schubstange in Verbindung mit einem drehbar gelagerten Hebel zum Antrieb sowohl des Hauptspriegels als auch des Spannbügels ermöglicht es lediglich denjenigen der beiden Hebel der dem Teil mit dem größten erforderlichen Verstellweg, also dem Hauptspriegel zugeordnet ist mit dem motorischen Antrieb drehsicher zu verbinden und den dem anderen Teil, also dem Spannbügel, zugeordneten Hebel vermittels einer Schleppeinrichtung nur über einen gewissen, für die Bewegung des Spannbügels erforderlichen Winkelbetrag hin durch den der Verstellung des Hauptspriegels zugeordneten Hebel anzutreiben, wobei die Verwendung einer einfachen Schleppeinrichtung die Anwendung aufwendiger Getriebeeinrichtungen vermeidet. Außerdem ermöglicht die Anwendung von Schubstangen zur Verbindung der anzutreibenden Teile, Hauptspriegel und Spannbügel, mit dem Antriebsmotor auch dessen Unterbringung an günstiger Stelle innerhalb der Fahrzeugkarosserie.

In einer bevorzugten Verwirklichungsform der Erfindung ist daher auch vorgesehen, daß der dem Antrieb des Hauptspriegels zugeordnete Hebel drehsicher mit der vom Motor angetriebenen Welle gekoppelt ist und der dem Antrieb des Spannbügels zugeordnete Hebel als Schlepphebel und doppelarmig ausgebildet sowie an seinem freien Hebelarm mit einer in beiden Bewegungsrichtungen wirksamen Mitnehmer- bzw. Schleppeinrichtung versehen ist.
Der Versatz der Lagerachsen der beiden Hebel ist dabei in einer horizontalen größer zu bemessen als die in der einen Bewegungsrichtung wirksame Länge der Mitnehmer- bzw. Schleppeinrichtung am freien Hebelarm des dem Antrieb des Spannhebels zugeordneten Hebels.
In Verbindung mit einer solchen Gestaltung der Mitnehmer-bzw. Schleppeinrichtung ist zweckmäßigerweise vorgesehen, daß die beiden Hebelarme des dem Antrieb des Spannbügels zugeordneten Hebels im rechten Winkel zueinander ausgerichtet sind und daß die Mitnehmereinrichtung am freien Hebelarm dieses Hebels in Abhängigkeit vom Achsverstaz der Lagerachsen der beiden Hebel derart unsymetrisch gestaltet ist, daß sie in der dem Anheben des Spannbügels zugeordneten Bewegungsrichtung nur über einen gewissen Winkelverstellweg des Hebels wirksam ist.

Die am freien Hebelarm des dem Antrieb des Spannbügels zugeordneten Hebels ausgebildete Mitnehmer- bzw. Schleppeinrichtung ist zweckmäßigerweise durch eine im wesentlichen U-förige Querschnittsgestaltung des Hebelarmes gebildet. Dies ist besonders vorteilhaft realisierbar, indem die beiden Hebel durch einfache Blechpressprofile gebildet werden.

In weiterer Einzelausgestaltung der Erfindung kann ferner noch vorgesehen werden, daß die beiden Hebel in zwei übereinanderliegenden Ebenen angeordnet sind und der dem Antrieb des Spannbügels zugeordnete Schlepphebel den Antriebshebel für den Hauptspriegel untergreifend angeordnet ist und daß darüberhinaus die wirksamen Hebelarme der beiden Hebel unterschiedliche Längen aufweisen, wobei der dem Antrieb des Spannbügels zugeordnete Hebelarm eine größere Länge aufweist als der dem Antrieb des Hauptspriegels zugeordnete Hebelarm.

Die Antriebseinrichtung ist zweckmäßigerweise so gestaltet, daß der dem Antrieb des Hauptspriegels zugeordnete Hebel vermittels eines Winkelgetriebes um seine Lagerachse rotierend von einem Elektromotor angetrieben ist.

Für die Gestaltung der Antriebseinrichtung kann in einer Abwandlung aber auch vorgesehen, daß der dem Antrieb des Hauptspriegels zugeordnete Hebel vermittels eines koaxial angeordneten Zahnkranzes und einer Zahnstange durch einen linearen Antriebsmotor angetrieben ist.

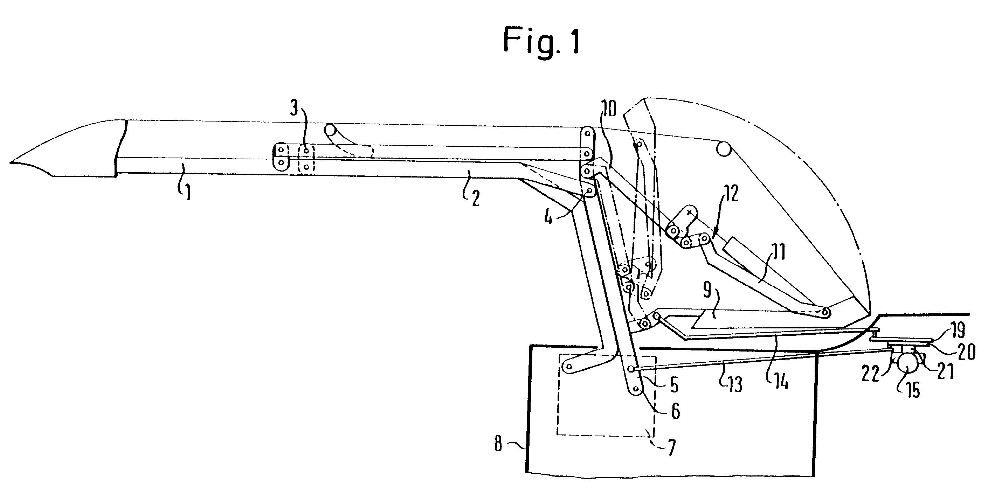

Die Erfindung ist in der nachfolgenden Beispielsbeschreibung anhand eines in der Zeichnung dargestellten Ausführungsbeispieles im Einzelnen beschrieben.
In der Zeichnung zeigt die
- Figur 1: eine mehr oder minder schematische Seitenansicht eines motorisch angetriebenen Klappverdeckes für Kraftfahrzeuge;
- Figur 2: eine Draufsicht auf eine Antriebseinrichtung für das Klappverdeck nach Figur 1 in verschiedenen Verdeckstellungen entsprechenden Verstellagen;
- Figur 3: eine Seitenansicht zu Figur 2;

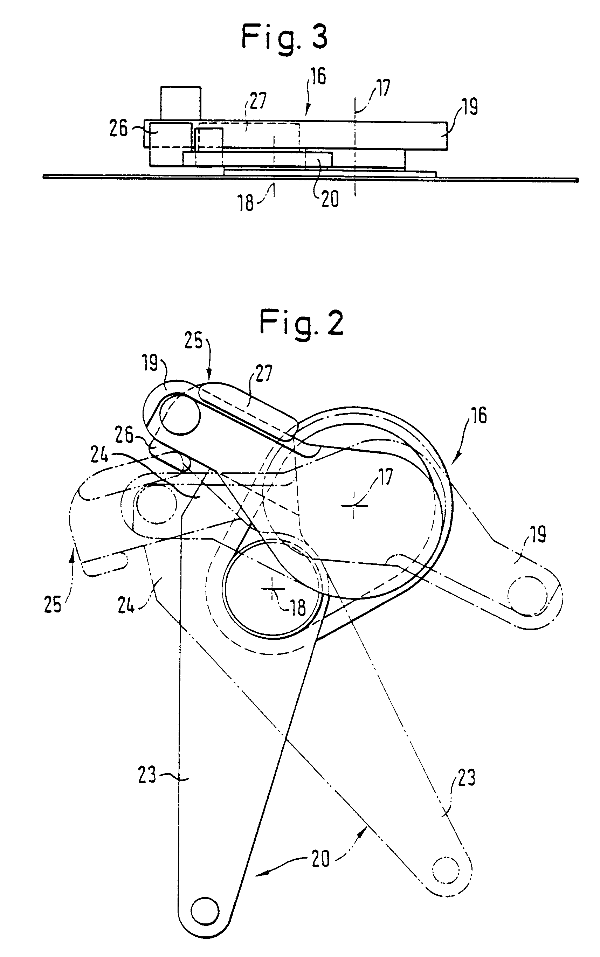

Bei einem motorisch antreibbaren Klappverdeck für Kraftfahrzeuge sind ein vorderer 1 und ein hinterer Dachrahmen 2 untereinander um eine quer zur Fahrtrichtung verlaufende Achse 3 schwenkbar miteinander verbunden und ist der hintere Dachrahmen 2 andernends ebenfalls um eine quer zur Fahrtrichtung verlaufende Achse 4 schwenkbar an einen Hauptspriegel 5 angeschlossen, der seinerseits um eine quer zur Fahrtrichtung verlaufende Achse 6 schwenkbar an der Fahrzeugkarosserie 8 befestigten Konsolen 7 angelenkt ist. Parallel zur Anlenkachse 6 des Hauptspriegels 5 ist mit diesem ein Spannbügel 9 schwenkbar verbunden, wobei bei geschlossenem Verdeck der Hauptspriegel 5 vermittels einer aus zwei gegeneinader schwenkbaren Teilen 10 und 11 bestehenden Sturmstange 12 gegen den Spannbügel 9 abgestützt ist. Bei dem im Ausführungsbeispiel dargestellten Klappverdeck stehen der Hauptspriegel 5 durch eine Schubstange 13 und der Spannbügel 9 durch eine weitere Schubstange 14 mit einem im Bereich des Kofferraumes der Fahrzeugkarosserie 8 angeordneten Antriebsmotor 15 in Antriebsverbindung. Für den folgerichtig gesteuerten Antrieb von Hauptspriegel 5 und Spannbügel 9 ist eine dem Antriebsmotor 15 nachgeschaltete Antriebseinrichtung 16 vorgesehen, die im wesentlichen zwei um zueinander nicht konzentrische Achsen 17 und 18 drehbar verlagerte Hebel 19 und 20 aufweist, deren einer Hebel 19 mit der Schubstange 13 für den Antrieb des Hauptspriegels 5 und deren anderer Hebel 20 mit der Schubstange 14 für den Antrieb des Spannbügels 9 verbunden ist. Der mit der Schubstange 13 zum Antrieb des Hauptspriegels 5 verbundene Hebel 19 ist dabei drehsicher auf der angetriebenen Welle 21 gelagert, die gleichzeitig auch seine Lagerachse 17 bildet und die mit dem Antriebsmotor 15 vermittels eines Winkelgetriebes 22 in Antriebsverbindung steht. Der mit der Schubstange 14 für den Antrieb des Spannbügels 9 verbundene Hebel 20 ist seinerseits frei drehbar auf einer feststehend und seitlich versetzt zur Welle 17 angeordneten Lagerachse 18 gelagert und als doppelarmiger Hebel ausgebildet, wobei er über seinen einen Hebelarm 23 mit der Schubstange 14 verbunden ist und an seinem anderen, freien Hebelarm 24 eine Mitnehmer-bzw. Schleppeinrichtung 25 aufweist, in die über einen gewissen Schwenkwinkelbereich hin der dem Antrieb des Hauptspriegels 5 zugeordnete Hebel 19 eingreift. Die Mitnehmer-bzw. Schleppeinrichtung 25 ist im Wesentlichen durch eine U-förmige Querschnittsgestaltung des freien Hebelarmes 24 gebildet und derart unsymetrisch gestaltet, daß der in der dem Anheben des Spannbügels 9 zugeordneten Mitnahmerichtung angeordnete Teil 26 der Mitnahme-bzw. Schleppeinrichtung 25 lediglich über einen gewissen Drehwinkelbereich hin von dem dem Antrieb des Hauptspriegels 5 zugeordneten Hebel 19 hintergriffen wird, während der andere Teil 27 der Mitnehmer-bzw. Schleppeinrichtung eine Länge ausweist, die eine Mitnahme des Hebels 20 bis zum völligen Beiklappen des Hauptspriegels 5 gewährleistet. Wie insbesondere aus der Darstellung der Figur 2 ersichtlich sind die beiden Hebelarme 23 und 24 des doppelarmigen Hebels 20 im rechten Winkel zueinander ausgerichtet. Die beiden Hebel 19 und 20 sind ferner, wie insbesondere aus der Darstellung der Figur 3 ersichtlich in zwei übereinanderliegenden Ebenen und derart angeordnet, daß der dem Antrieb des Spannbügels 9 zugeordnete Hebel 20 den dem Antrieb des Hauptspriegels 5 zugeordneten Hebel 19 untergreift bzw. im Bereich der Mitnehmer-oder Schleppeinrichtung 25 umgreift.

## Patentansprüche

1. Antriebseinrichtung für ein motorisch antreibbares Klappverdeck für Kraftfahrzeuge, welches ein im wesentlichen aus einem vorderen (1) und einem hinteren (2) Dachrahmen, einem vermittels einer Konsole (7) an der Fahrzeugkarosserie (8) angelenkten Hauptspriegel (5), einer diesen abstützenden Sturmstange (12) sowie einem Spannbügel (9) bestehendes Gestänge und einen motorischen Antrieb samt einer Übertragungseinrichtung zur aufeinanderfolgenden Beaufschlagung des Hauptspriegels (5) und des Spannbügels (9) mit der Antriebskraft des motorischen Antriebes umfasst, wobei der Spannbügel (9) und der Hauptspriegel (5) jeweils über eine Schubstange (13 bzw. 14) und einen um eine feststehende Achse (17 bzw. 18) drehbar gelagerten Hebel (19 bzw. 20) mit einer von einem Antriebsmotor (15) angetriebenen Welle (21) in getrieblicher Antriebsverbindung stehen, wobei die beiden Hebel (19 und 20) um zueinander nicht konzentrische Achsen (17 und 18) schwenkbar gelagert sowie wegabhängig antriebsgekoppelt sind .

2. Antriebseinrichtung nach Anspruch 1, dadurch gekennzeichnet, daß der dem Antrieb des Hauptspriegels (5) zugeordnete Hebel (19) drehsicher mit der vom Antriebsmotor (15) angetriebenen Welle (21) gekoppelt ist und der dem Spannbügel (9) zugeordnete Hebel (20) als Schlepphebel ausgebildet ist.

3. Antriebseinrichtung nach Anspruch 1 und 2, dadurch gekennzeichnet, daß der dem Antrieb des Spannbügels (9) zugeordnete Hebel (20) als Schlepphebel und doppelarmig ausgebildet sowie an seinem freien Hebelarm (24) mit einer in beiden Bewegungsrichtungen wirksamen Mitnehmereinrichtung (25) versehen ist.

4. Antriebseinrichtung nach Anspruch 1 bis 3, dadurch gekennzeichnet, daß der Versatz der Lagerachsen (17 und 18) der beiden Hebel (19 und 20) größer ist als die wirksame Länge der Mitnehmereinrichtung (25) am freien Hebelarm (24) des dem Antrieb des Spannbügels (9) zugeordneten Hebels (20).

5. Antriebseinrichtung nach Anspruch 1 bis 4, dadurch gekennzeichnet, daß die beiden Hebelarme (23 und 24) des dem Antrieb des Spannbügels (9) zugeordneten Hebels (20) im rechten Winkel zueinander ausgerichtet sind und daß die Mitnehmereinrichtung (25) am freien Hebelarm (24) dieses Hebels (20) in Abhängigkeit vom Achsverstaz der Lagerachsen (17 und 18) der beiden Hebel (19 und 20) derart unsymetrisch gestaltet ist, daß sie in der dem Anheben des Spannbügels (9) zugeordneten Bewegungsrichtung nur über einen gewissen Winkelverstellweg des Hebels (20) wirksam ist.

6. Antriebseinrichtung nach Anspruch 1 bis 5, dadurch gekennzeichnet, daß die Mitnehmereinrichtung (25) am freien Hebelarm (24) des dem Antrieb des Spannbügels (9) zugeordneten Hebels (20) durch eine im wesentlichen U-förige Querschnittsgestaltung des Hebelarmes (24) gebildet ist.

7. Antriebseinrichtung nach Anspruch 1 bis 6, dadurch gekennzeichnet, daß die beiden Hebel (19 und 20) in zwei übereinanderliegenden Ebenen angeordnet sind und der dem Antrieb des Spannbügels (9) zugeordnete Schlepphebel (20) den Antriebshebel (19) für den Hauptspriegel (5) untergreifend angeordnet ist.

8. Antriebseinrichtung nach Anspruch 1 bis 7, dadurch gekennzeichnet, daß die wirksamen Hebelarme (19 und 23) der beiden Hebel (19 und 20) unterschiedliche Längen aufweisen, wobei der dem Antrieb des Spannbügels (9) zugeordnete Hebelarm (23) eine größere Länge aufweist als der dem Antrieb des Hauptspriegels (5) zugeordnete Hebelarm (19).

9. Antriebseinrichtung nach Anspruch 1 bis 8, dadurch gekennzeichnet, daß der dem Antrieb des Hauptspriegels (5) zugeordnete Hebel (19) vermittels eines Winkelgetriebes (22) um seine Lagerachse (17) rotierend von einem Elektromotor (15) angetrieben ist.

10. Antriebseinrichtung nach Anspruch 1 bis 9, dadurch gekennzeichnet, daß der dem Antrieb des Hauptspriegels zugeordnete Hebel vermittels eines koaxial angeordneten Zahnkranzes und einer Zahnstange durch einen linearen Antriebsmotor angetrieben ist.

## Claims

1. A drive means for a folding roof adapted to be motor driven and intended for motor vehicles, which comprises a linkage consisting substantially of a front roof frame (1) and a rear roof frame (2), a main arch (5) articulated by means of a bracket (7) on the vehicle bodywork (8), a stay bar (12) which supports the main arch (5), and a stretcher member (9), and also comprising a motorised drive together with a transmission means for successively actuating the main arch (5) and the tensioning member (9) with the driving force of the motor drive, the tensioning member (9) and the main arch (5) being, via a respective push-rod (13 or 14) and a lever (19, 20) mounted to rotate about a fixed axis (17, 18), connected for transmission of a drive to a shaft (21) which is driven by a driving motor (15), the two levers (19 and 20) being mounted to pivot about axes (17 and 18) which are not concentric with each other and being coupled in such a way as to be driven in a path-dependent fashion.

2. A drive means according to Claim 1, characterised in that the lever associated with the drive of the main arch (5) is rotationally securely coupled to the shaft (21) which is driven by the driving motor (15) while the lever (20) associated with the tensioning member (9) is constructed as a trailing lever.

3. A drive means according to Claim 1 and 2, characterised in that the lever (20) associated with the drive of the tensioning member (9) is constructed as a trailing lever and is double-armed while at its free end (24) it is provided with an entraining means (25) which operates in both directions of movement.

4. A drive means according to Claim 1 to 4, characterised in that the offset of the bearing axes (17 and 18) of the two levers (19 and 20) is greater than the effective length of the entraining device (25) at the free lever arm (24) of the lever (20) associated with the drive of the tensioning member (9).

5. A drive means according to Claim 1 to 4, characterised in that the two lever arms (23 and 24) of the lever (20) associated with the drive of the tensioning member (9) are orientated at right-angles to each other and in that the entraining device (25) on the free lever arm (24) of this lever (20) is so asymmetrically constructed as a function of the axial offset of the bearing axes (17 and 18) of the two levers (19 and 20) that it is effective in the direction of movement associated with the raising of the tensioning lever (9) solely through a certain path of angular displacement of the lever (20).

6. A drive means according to Claim 1 to 5, characterised in that the entraining device (25) on the free lever arm (24) of the lever (20) associated with the drive of the tensioning member (9) is formed by a substantially U-shaped cross-sectional configuration of the lever arm (24).

7. A drive means according to Claim 1 to 6, characterised in that the two levers (19 and 20) are disposed in two superimposed planes and in that the trailing lever (20) associated with the drive of the tensioning member (9) is so disposed that it engages under the drive lever (19) for the main arch (5).

8. A drive means according to Claims 1 to 7, characterised in that the effective lever arms (19 and 23) of the two levers (19 and 20) are of different length, the lever arm (23) associated with the drive of the tensioning member (9) being of greater length than the lever arm (19) associated with the drive of the main arch (5).

9. A drive means according to Claim 1 to 8, characterised in that the lever (19) associated with the drive of the main arch (5) is driven by an electric motor (15) so that it rotates about its bearing axis (19) through the action of an angular gear mechanism (22).

10. A drive means according to Claim 1 to 9, characterised in that the lever associated with the drive of the main arch is driven by a linear driving motor through a coaxially disposed sprocket and a rack.

## Revendications

1. Dispositif d'entraînement pour capote pliable de véhicules automobiles, commandée par moteur, qui est constituée pour l'essentiel:
- d'une part, d'une tringlerie composée d'un cadre avant (1), d'un cadre arrière (2), d'un arceau principal (5) articulé sur la carrosserie (8) par l'intermédiaire d'une console (7), d'une barre (12) servant d'appui à l'arceau principal (5), et, d'un étrier tendeur (9), et,
- d'autre part, d'un mécanisme d'entraînement commandé par moteur, comportant un dispositif de transmission de la force d'entraînement successivement sur l'arceau principal (5), puis sur l'étrier tendeur (9), où l'étrier tendeur (9) et l'arceau (5) sont assemblés, par l'intermédiaire d'une bielle (13), (14) et d'un levier (19), (20) articulé autour d'un axe fixe (17), (18), avec un arbre (21) commandé par moteur (15) assurant leur entraînement, et où l'entraînement des leviers (19), (20) articulés autour des axes (17), (18) non concentriques, dépend du chemin parcouru.

2. Dispositif d'entraînement selon la revendication 1 *caractérisé en ce que* le levier (19) assurant l'entraînement de l'arceau principal (5) est couplé sans possibilité de rotation avec l'arbre (21) entraîné par le moteur de commande (15) et *en ce que* le levier (20) associé à l'étrier tendeur (9) constitue un levier remorquant.

3. Dispositif d'entraînement selon les revendications 1 et 2 *caractérisé en ce que* le levier (20) assurant l'entraînement de l'étrier tendeur(9) et constituant un levier remorquant, comporte deux bras dont le bras de levier libre (24) est pourvu d'un élément d'entraînement (25) efficace dans les deux sens de mouvement.

4. Dispositif d'entraînement selon les revendications 1 à 3 *caractérisé en ce que* le décalage des axes d'articulation (17), (18) des deux leviers (19), (20) est plus grand que la longeur efficace de l'élément d'entraînement (25) disposé sur le bras de levier libre (24) du levier (20) associé à l'étrier tendeur (9).

5. Dispositif d'entraînement selon les revendications 1 à 5 *caractérisé en ce que* les deux bras de levier (23), (24) du levier (20) assurant l'entraînement de l'étrier tendeur (9) déterminent ensemble un angle droit et *en ce que* l'élément d'entraînement (25) prévu sur le bras libre (24) du levier (20) est de conformation asymétrique, en fonction du décalage des axes d'articulation (17), (18) des deux leviers (19), (20), de sorte que ledit élément d'entraînement ne soit efficace, dans le sens du mouvement de soulèvement de l'étrier tendeur (9), que sur un angle de déplacement déterminé du levier (20).

6. Dispositif d'entraînement selon les revendications 1 à 5 *caractérisé en ce que* l'élément d'entraînement (25) prévu sur le bras libre (24) du levier (20) qui assure l'entraînement de l'étrier tendeur (9), est constitué par un segment du bras de levier (24) de section transversale en forme de U.

7. Dispositif d'entraînement selon les revendications 1 à 6 *caractérisé en ce que* les leviers (19), (20) sont disposés dans deux plans superposés et *en ce que* le levier remorquant (20) associé à l'étier tendeur (9) s'engage sous le levier de commande (19) associé à l'arceau principal (5).

8. Dispositif d'entraînement selon les revendications 1 à 7 *caractérisé en ce que* les bras efficaces (19), (23) des leviers (19) et (20) sont de longueur différente, le bras de levier (23) assurant l'entraînement de l'étrier tendeur (9) étant plus long que le bras de levier (19) assurant l'entraînement de l'arceau principal (5).

9. Dispositif d'entraînement selon les revendications 1 à 8 *caractérisé en ce que* le levier (19) assurant l'entraînement de l'arceau principal (5) est commandé par un moteur électrique (15), par l'intermédiaire d'un engrenage angulaire (22), l'entraînant en rotation autour de son axe d'articulation (17).

10. Dispositif d'entraînement selon les revendications 1 à 9 *caractérisé en ce que* le levier assurant l'entraînement de l'arceau principal est commandé par un moteur linéaire, par l'intermédiaire d'une couronne dentée et d'une crémaillère disposés coaxialement.
